Europäisches Patentamt

European Patent Office

Office européen des brevets

(11) Publication number: **0 497 999 A1**

# EUROPEAN PATENT APPLICATION

(21) Application number: **91101450.4**

(22) Date of filing: **04.02.91**

(51) Int. Cl.⁵: **B62M 1/14**

(43) Date of publication of application:
**12.08.92 Bulletin 92/33**

(84) Designated Contracting States:
**AT BE CH DE DK ES FR GB GR IT LI LU NL SE**

(71) Applicant: **Chang, Morgan**
**No. 291, Sec. 1, Chang Nan Rd**
**Chang Hua City(TW)**

(72) Inventor: **Chang, Morgan**
**No. 291, Sec. 1, Chang Nan Rd**
**Chang Hua City(TW)**

(74) Representative: **Gramm, Werner, Prof.**
**Dipl.-Ing. et al**
**Patentanwälte Gramm + Lins**
**Theodor-Heuss-Strasse 2**
**W-3300 Braunschweig(DE)**

(54) **A pulling type driving mechanism for a vehicle.**

(57) A driving mechanism (20) for a vehicle (10), the vehicle (10) has a pair of pinions (30) located on both sides of each of two axles (14). A lever arm (21) has a handle (22) provided on an upper end and has a lower end pivotally coupled to each axle. A pair of racks (33) are fixed to the lower end of each lever arm (21) and are engaged with the pinions (30). A gear (35) is rotatably provided on each axle (14) and is engaged with the pinion (30). A wheel is coupled to the gear (35). When the handle (22) are pulled in a reciprocating action, the wheels can be driven to rotate so that the vehicle (10) can be caused to move forward.

FIG. 1

EP 0 497 999 A1

The invention relates to a pulling type driving mechanism for a vehicle.

Vehicle, especially toy vehicle is generally driven by foot pedals. As far as applicant is aware, there is no vehicle which is driven by pulling type driving mechanism.

The objective of the invention is to provide a novel pulling type driving mechanism for a vehicle which is adapted to permit muscle groups in the upper part of the body to be used in the course of operation of the exerciser.

FIG. 1 is a perspective view of a vehicle having a pulling type driving mechanism;

FIG. 2 is an exploded view of the pulling type driving mechanism;

FIG. 3 is a side view of the driving mechanism, in which for clearly illustration purposes, the tire has been removed; and

FIG. 4 is a cross sectional view taken along lines 4-4 of FIG. 3.

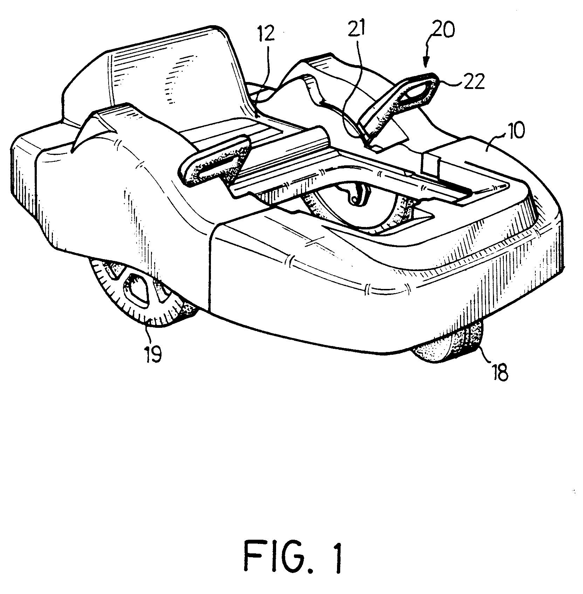

Referring to FIG. 1, a pulling type driving mechanism 20 is disposed in a vehicle 10 for driving the vehicle 10 to move forward. When the user who is seated on the seat portion 12 of the vehicle 10 pull the handle portions 22 of the driving mechanism 20 to make a reciprocating movement, the vehicle 10 can be caused to move forward. A front wheel 18 and two rear wheels 19 are provided on the vehicle 10.

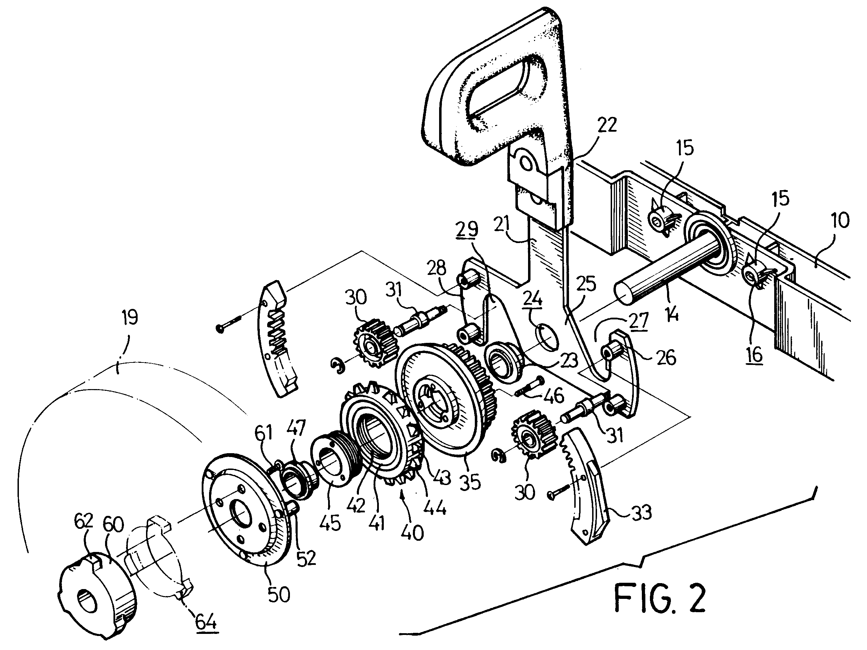

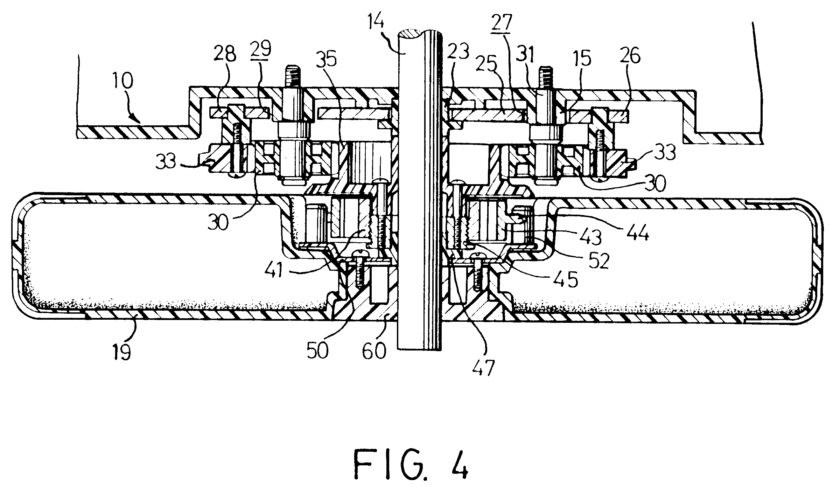

Referring next to FIGS. 2, 3 and 4, the pulling type driving mechanism 20 comprises a pair of lever arms 21 having a handle portion 22 provided on an upper end thereof and having a plate 25 perpendicularly formed on a lower end thereof. A hole 24 is formed in the middle portion of the plate 25 for receiving a bearing member 23 which is engaged on the axle 14 so that the lever arms 21 are freely rotatable about the axles 14. A protrusion 15 with a screw hole 16 formed therein is integrally formed on the vehicle 10 and is located on each laterally side of each of the axles 14. An extension 26, 28 and a notch 27, 29 are formed on each side of the plate 25, in which the extension 26 extends upward and the extension 28 extends downward, the notch 27 opens upward and the notch 29 opens downward.

A pinion 30 is rotatably provided on one end of a shaft 31 which has the other end threadedly engaged to the screw hole 16 of each of the protrusions 15. The shafts 31 extend through the respective notches 27, 29 of the plate 25. A rack 33 which is arch shaped is fixed to each of the extensions 26, 28 of the plate 25 and is engaged with the respective pinion 30 so that the pinions 30 can be driven to rotate by the racks 33 when the lever arm 21 is pulled in a reciprocating action. A gear 35 is rotatably disposed on the axle 14 and is engaged with the pinions 30 so that the gear 35 can also be driven to rotate when the lever arm 21 is pulled in a reciprocating action.

A sprocket shaft bearing 40 includes an inner ring 41 having an inner thread 42 formed in an inner surface, and an outer ring 43 having a plurality of teeth 44 formed on the outer peripheral surface. The outer ring 43 can be caused to rotate unidirectionally by the inner ring 41, which can be easily done by the present art and will not be described in further details. A sleeve nut 45 is threadedly engaged with the inner thread 42 of the sprocket shaft bearing 40 and is fixed to the gear 35 by bolts 46 so that the inner ring 41 of the sprocket shaft bearing 40 and the gear 35 rotate in concert. A bearing member 47 is provided between the sleeve nut 45 and the axle 14 so that the sleeve nut 45 is freely rotatable.

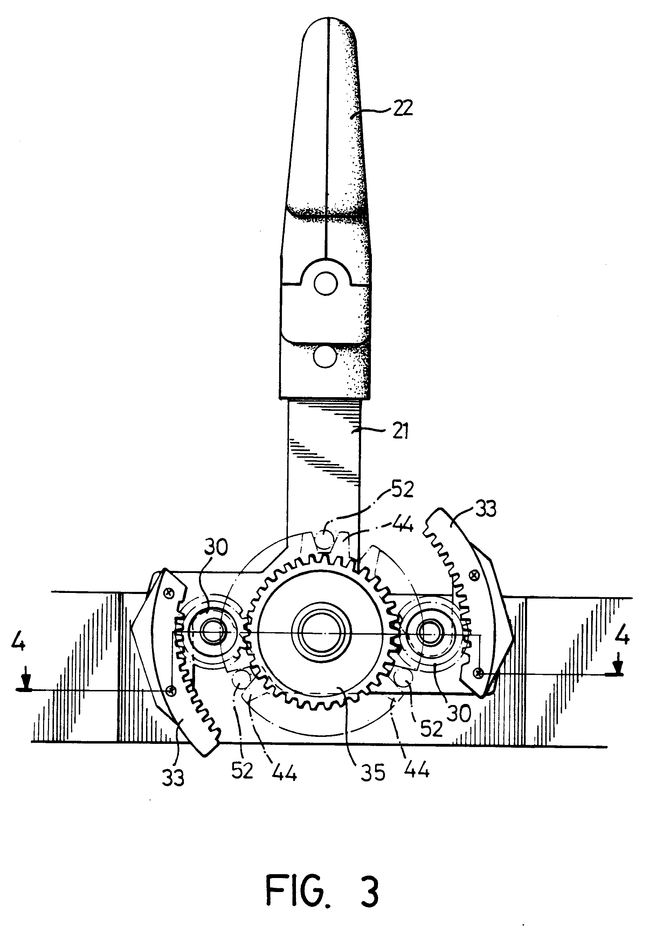

Three lugs 62 are formed on the outer peripheral surface of a hub 60 and are engaged with three recesses 64 of each of the rear wheels 19, and a disc 50 is fixed to the hub 60 by bolts 61 so that the wheel 19 and the disc 50 rotate in concert. The hub 60 and the disc 50 are rotatably provided on the axle 14. Three stubs 52 are integrally fixed to the outer peripheral edge of the disc 50 and extend toward the sprocket shaft bearing 40 in order to be engaged between the teeth 44, as shown in dotted lines in FIG. 3, so that the outer ring 43 of the sprocket shaft bearing 40 and the disc 50 rotate in concert. The pulling type driving mechanism is arranged such that the wheel 19 can be driven to rotate unidirectionally when the lever arm 21 is pulled in a reciprocating action and such that the vehicle 10 can be caused to move forward.

Accordingly, when the handle portions 22 of the pulling type driving mechanism are pulled by a user in reciprocating action, the rear wheels 19 of the vehicle 10 can be driven to rotate unidirectionally so that the vehicle 10 can be driven to move forward. It is to be noted that one of the rear wheels 19 will move faster than the other rear wheel 19 when one of the handle portions 22 is pulled faster and harder than the other so that the movement direction of the vehicle can be changed and so that the vehicle can be turned. The muscle groups in the upper part of the body can be used in the course of operation of the vehicle.

## Claims

1. A driving mechanism for a vehicle, said vehicle having a pair of axles extended laterally outward therefrom; said driving mechanism comprising a pair of pinions fixed to said vehicle and located on both sides of each of said axles, a lever arm having a handle portion provided on an upper end and having a lower end pivotally coupled to each of said axles, a pair of racks being fixed to said lower end of each of said lever arms and being engaged with said pinions respectively, a gear being rotatably provided on each of said axles and being engaged with said pinions, and a wheel being coupled to said gear by a unidirectional bearing so that said wheel can be driven to rotate unidirectionally by said gear; and when said handle portions of said lever arms are pulled by a user in a reciprocating action, said wheels being driven to rotate unidirectionally so that said vehicle can be caused to move forward.

2. A driving mechanism according to claim 1, wherein said unidirectional bearing has an inner ring integrally coupled to said gear and has a plurality of teeth formed on an outer peripheral surface of an outer ring thereof so that said outer ring can be driven to rotate unidirectionally when said lever arms are pulled in a reciprocating action; a disc which is fixed to a hub of said wheel has at least one stub integrally formed thereon for engagement with said teeth of said unidirectional bearing so that said wheel can be driven to rotate unidirectionally.

3. A driving mechanism according to claim 2, wherein said hub has at least one lug integrally formed on an outer surface thereof, said wheel has at least one recess formed in a center portion thereof for receiving said lug of said hub, and said disc is fixed to said hub so that said wheel and said disc rotate in concert.

4. A driving mechanism according to claim 2, wherein a sleeve nut is threadedly engaged with said inner ring of said unidirectional bearing and is fixed to said gear so that said inner ring and said gear rotate in concert.

5. A driving mechanism according to claim 1, wherein a plate is integrally and perpendicularly formed on said lower end of each of said lever arms, a pair of extensions and a pair of notches are formed on both sides of said plate, one of said extensions extends upward and the other extends downward, one of said notches opens upward and the other opens downward, said racks are fixed to said extensions, each of said pinions is rotatably coupled on a shaft which extends through a respective notch and which is fixed to said vehicle so that said racks are engagable with said pinions.

FIG. 1

FIG. 2

FIG. 3

FIG. 4

EP 0 497 999 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 503 724 (WARD)<br>* column 1, lines 30-52; column 3, line 18 - column 4, line 36; figures 4-7 * | 1,2,5 | B 62 M 1/14 |
| A | US-A-4 762 332 (M.T. SEOL)<br>* column 3, lines 36-68; figures 1,2,4 * | 1,2 | |
| A | FR-A- 962 856 (SAXER)<br>* page 3, lines 25-68; figures 1,2 * | 1,2 | |
| A | US-A-4 667 975 (FABIANO)<br>* column 1, lines 38-60; column 3, line 23 - column 5, line 3; figure 5 * | 1 | |

TECHNICAL FIELDS
SEARCHED (Int. Cl.5)

B 62 M
A 63 H
A 61 G

The present search report has been drawn up for all claims

| Place of search | Date of completion of the search | Examiner |
|---|---|---|
| BERLIN | 02-09-1991 | MONNE E.M.B. |